# EUROPÄISCHE PATENTANMELDUNG

(11) **EP 1 587 190 A1**
(43) Veröffentlichungstag der Anmeldung: **19.10.2005**
(21) Anmeldenummer: 05007218.0
(22) Anmeldetag: 01.04.2005
(51) Int. Cl.: H02B 1/30

(54) **Schrankkorpus für einen Schaltschrank**

(30) Priorität: 18.04.2004 DE 102004020296
(71) Anmelder: Rittal GmbH & Co. KG, 35745 Herborn (DE)
(72) Erfinder: Benner, Rolf, 35745 Herbom-Amdorf (DE); Schauwecker, Uwe, 35745 Herbom (DE)
(74) Vertreter: Fleck, Hermann-Joseph

(57) **Zusammenfassung**

Die Erfindung betrifft einen Schrankkorpus für einen Schaltschrank aus zwei vertikalen Seitenwänden, die über ein Bodenteil und ein Deckteil miteinander verbunden sind und ein auf der Frontseite und der Rückseite offenen Rahmenkörper bilden, wobei die Rückseite mit einer Rückwand und die Frontseite mit an den beiden vertikalen Seitenwänden angelenkten Schranktüre verschlossen oder verschließbar sind. Ist nach der Erfindung vorgesehen, dass die vertikalen Seitenwände an den vertikalen Seiten und den horizontalen Seiten rechtwinklig abgewinkelte Ränder aufweisen, die in den Eckbereichen auf Abstand zueinander stehen und Steckaufnahmen freilassen, dass das Deck- und Bodenteil an den der Front- und Rückseite zugekehrten Seiten mit den den vertikalen Seitenwänden zugekehrten Seiten mit rechtwinklig abgekanteten Rändern versehen sind, die in den Eckbereichen auf Abstand zueinander stehen und einen Einführschlitz freilassen, dass die der Front- und Rückseite zugekehrten Ränder von Deck- und Bodenteil in die Steckaufnahmen der vertikalen Seitenwände eingesteckt sind, wobei die den vertikalen Seitenwände zugekehrten Ränder von Deck- und Bodenteil die Außenseiten der vertikalen Seitenwände hintergreifen und dass zumindest im Bereich der Steckaufnahmen und der Einführschlitze die Seitenwände und das Deck- und Bodenteil fest miteinander verbunden, vorzugsweise miteinander verschweißt sind, dann wird für den Aufbau des Schrankkorpus nicht nur der Teileaufwand sondern auch der Montageaufwand beträchtlich reduziert.

## Beschreibung

Die Erfindung betrifft einen Schrankkorpus für einen Schaltschrank aus zwei vertikalen Seitenwänden, die über ein Bodenteil und ein Deckteil miteinander verbunden sind und ein auf der Frontseite und der Rückseite offenen Rahmenkörper bilden, wobei die Rückseite mit einer Rückwand und die Frontseite mit an den beiden vertikalen Seitenwänden angelenkten Schranktüre verschlossen oder verschließbar sind.

Bei den bekannten Schaltschränken sind die Seitenwände, das Deck- und Bodenteil, sowie die Rückwand und die Schranktüre reine Verkleidungselemente, die die offene Seite eines aus horizontalen und vertikalen Rahmenschenkeln zusammengesetzten Rahmengestelles als Schrankkorpus verschließen. Ein derartiger Schaltschrankaufbau erfordert nicht nur einen großen Teileaufwand, sondern benötigt auch einen beachtlichen Montageaufwand.

Es hat daher nicht an Versuchen gefehlt, einen Schrankkorpus für einen Schaltschrank zu schaffen, der ohne das aufwändige und teuere Rahmengestell auskommt. Die dabei erzielte Einsparung basiert in erster Linie auf der Reduzierung der erforderlichen Teile des Rahmengestelles. Der Aufbau eines Schrankkorpus für einen Schaltschrank allein aus den Seitenwänden, dem Deck- und Bodenteil, sowie der Rückwand und der Schranktür erfordert jedoch noch einen erheblichen Montageaufwand.

Es ist Aufgabe der Erfindung, einen Schrankkorpus für einen Schaltschrank der eingangs erwähnten Art zu schaffen, bei dem durch eine wesentliche Vereinfachung der Montagearbeit weitere erhebliche Kosteneinsparungen bei der Herstellung erzielt werden können.

Diese Aufgabe wird nach der Erfindung dadurch gelöst, dass die vertikalen Seitenwände an den vertikalen Seiten und den horizontalen Seiten rechtwinklig abgewinkelte Ränder aufweisen, die in den Eckbereichen auf Abstand zueinander stehen und Steckaufnahmen freilassen, dass das Deck- und Bodenteil an den der Front- und Rückseite zugekehrten Seiten mit den den vertikalen Seitenwänden zugekehrten Seiten mit rechtwinklig abgekanteten Rändern versehen sind, die in den Eckbereichen auf Abstand zueinander stehen und einen Einführschlitz freilassen, dass die der Front- und Rückseite zugekehrten Ränder von Deck- und Bodenteil in die Steckaufnahmen der vertikalen Seitenwände eingesteckt sind, wobei die den vertikalen Seitenwände zugekehrten Ränder von Deck- und Bodenteil die Außenseiten der vertikalen Seitenwände hintergreifen und dass zumindest im Bereich der Steckaufnahmen und der Einführschlitze die Seitenwände und das Deck- und Bodenteil fest miteinander verbunden, vorzugsweise miteinander verschweißt sind.

Bei dieser neuen Ausgestaltung der Seitenwände und des Deck- und Bodenteils wird ein Rahmenkörper zusammengesteckt, wobei nach dem Zusammenstecken nur in den Eckbereichen die feste Verbindung von Seitenteilen und Deck- und Bodenteilen hergestellt werden muss. Dabei kann neben dem durchgehenden Verschweißen auch ein Punktschweißen genügend sein. Ebenso kann ein Verkleben oder Verschrauben sowie ein Laserschweißen angewendet werden. Diese zusätzliche feste Verbindung dient in erster Linie der Sicherung der Steckverbindungen gegen ein unbeabsichtigtes Lösen.

Damit die abgekanteten Ränder der Seitenwände und des Deck- und Bodenteils ausreichend Stabilität aufweisen und das Zusammenstecken des Rahmenkörpers erleichtern, sieht eine Ausgestaltung vor, dass die Ränder der Seitenwände, des Bodenteils und des Deckteils gleiche Breite aufweisen.

Für den dichten Abschluss der Frontseite des Rahmenkörpers ist eine Ausgestaltung von Wichtigkeit, die dadurch gekennzeichnet ist, dass die der Frontseite zugekehrten Ränder der Seitenwände und von Deck- und Bodenteil in Anlagestege übergehen, die senkrecht an diesen Rändern abstehen, dass diese Anlagestege in den aufeinander stoßenden Eckbereichen mit Aussparungen versehen sind, die eine Breite aufweisen, die der Breite dieser Ränder entspricht und dass die aufeinander stoßenden Enden der Ränder fest miteinander verbunden, vorzugsweise miteinander verschweißt sind. Dieser Anlagesteg kann in Verbindung mit einem Dichtelement auf der Innenseite der Schranktüre für die Abdichtung der Frontseite des Rahmenkörpers verwendet werden.

Ein bündiger Abschluss der Rückseite des Rahmenkörpers mit der Rückwand wird dadurch sichergestellt, dass die der Rückseite zugekehrten Ränder der Seitenwände und des Deck- und Bodenteils in Endabschnitte auslaufen, die um die Dicke der Rückwand zur Rückseite hin abgesetzt sind, und dass die Rückwand mit diesen Endabschnitten verbunden ist und bündig mit den Rändern der Seitenwände und von Deck- und Bodenteil abschließt.

Für die Einführung von Kabeln in den Innenraum des Schrankkorpus dient eine Ausgestaltung, die dadurch gekennzeichnet, dass das Bodenteil mit einem Durchbruch zum Einbau von Kabeleinführungen versehen ist, die von einem abgekanteten Rand umgeben ist, der sich in den Innenraum des Rahmenkörpers erstreckt.

Der Aufbau des Schrankkorpus kann nach einer Weiterbildung dadurch variiert werden, dass die dem Deck- und Bodenteil zugekehrten Ränder der Seitenwände doppellagig ausgebildet sind und in Regenablaufabschnitte übergehen, die im spitzen Winkel zu den Seitenwänden abstehen, und dass die den Seitenwänden zugekehrten Ränder im gleichen Winkel zu dem Deck- und Bodenteil stehen und auf den Regenablaufabschnitten der Seitenwände aufliegend mit diesen fest verbunden, vorzugsweise verschweißt sind. Diese Variante ist besonders für im Freien aufgestellte Schaltschränke geeignet.

Die Erfindung wird anhand eines in den Zeichnungen dargestellten Ausführungsbeispiels näher erläutert. Es zeigen:
- Fig. 1: in perspektivischer Explosionsdarstellung zwei vertikale Seitenwände, ein Deckteil, ein Bodenteil und eine Rückwand, die zu einem Schrankkorpus für einen Schaltschrank zusammenbaubar sind,
- Fig. 2: in vergrößerter Teilperspektive die Ausgestaltung einer Seitenwand und des Deckteils im Bereich einer Ecke des Rahmenkörpers,
- Fig. 3: den in Fig. 2 gezeigten Eckbereich in vollzogener Steckverbindung und
- Fig. 4: eine der Fig. 2 entsprechende Darstellung der variierten Verbindung zwischen Seitenwand und Deckteil mit Regenwasserablauf.

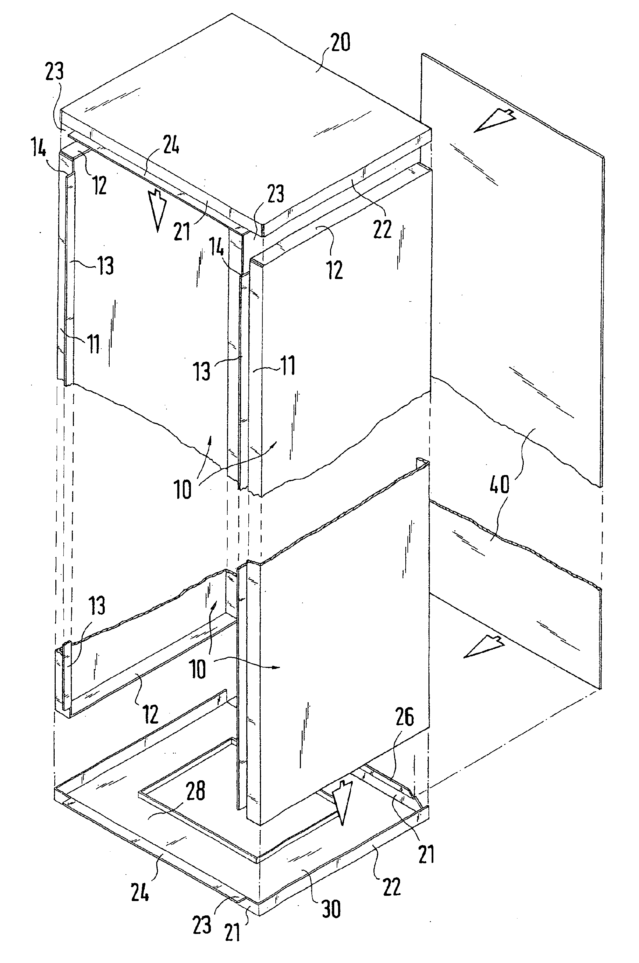

In Fig. 1 nehmen die beiden identisch ausgebildeten vertikalen Seitenwände 10 um 180° verdrehte Positionen ein. Dasselbe gilt für das Deck- und das Bodenteil 20 und 30 mit Ausnehmung des Durchbruches 28, der nur im Bodenteil 30 zum Einbau von Kabeleinführungen vorgesehen ist. Dieser Durchbruch 28 kann mit einem umlaufend abgekanteten Rand versehen sein, der in den Innenraum des Schrankkorpus gerichtet ist. Die Rückseite des Rahmenkörpers aus den beiden Seitenwänden 10, dem Deckel 20 und dem Bodenteil 30 wird mit einer Rückwand 40 verschlossen.

Die vertikalen Seiten der Seitenwände 10 sind mit einem abgekanteten Rand 11 versehen, der senkrecht zur Seitenwand 10 steht. Die horizontalen Seiten der Seitenwände 10 tragen einen senkrecht abgekanteten Rand 12. Am Deckteil 20 und am Bodenteil 30 sind den Seitenwänden 10 zugekehrt senkrecht abgekantete Ränder 22 vorgesehen und die der Frontseite und der Rückseite des Rahmenkörpers zugekehrten Seiten von Deckteil 20 und Bodenteil 30 tragen senkrecht abgekantete Ränder 21.

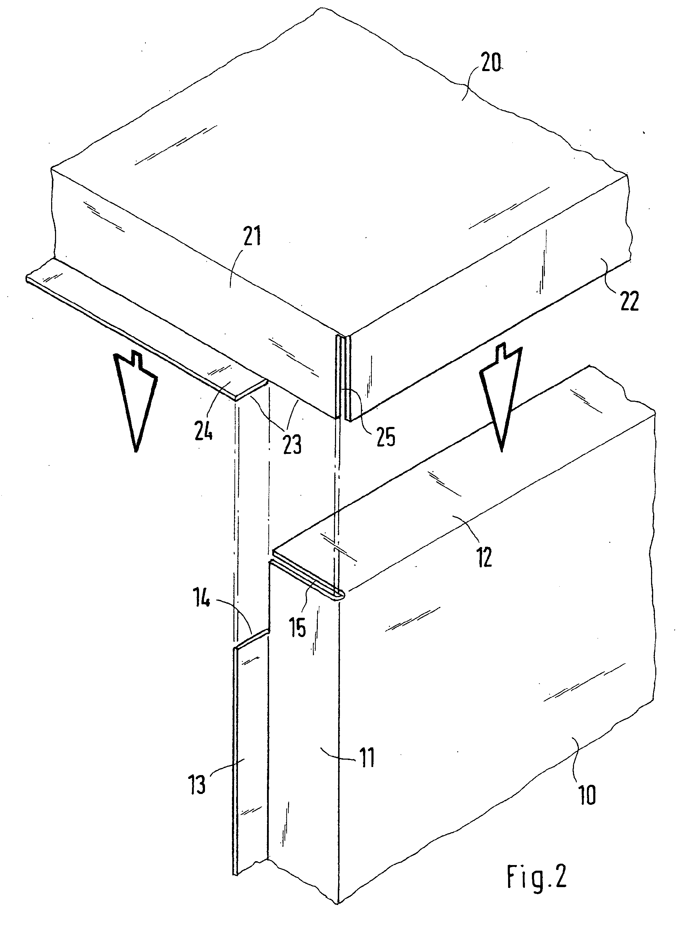

Die Teilperspektive nach Fig. 2 zeigt einen Eckbereich, in dem eine Seitenwand 10 auf das Deckteil 20 trifft. Daraus ist zu ersehen, dass die abgekanteten Ränder 11 und 12 der Seitenwände im Eckbereich nicht aufeinander stoßen, im Abstand zueinander stehen und eine Steckaufnahme 15 bilden.

Dasselbe gilt auch für die Ränder 21 und 22 von Deckteil 20 und Bodenteil 30. Die der Front- und der Rückseite des Rahmenkörpers zugekehrten Ränder 21 von Deckteil 20 und Bodenteil 30 können in die Steckaufnahmen 15 der Seitenwände 10 eingesteckt werden, wobei der Rand 2 auf die Außenseite der Seitenwand 10 zu liegen kommt und der Einführungsschlitz 25 den Übergang vom Rand 11 zur Seitenwand 10 aufnimmt.

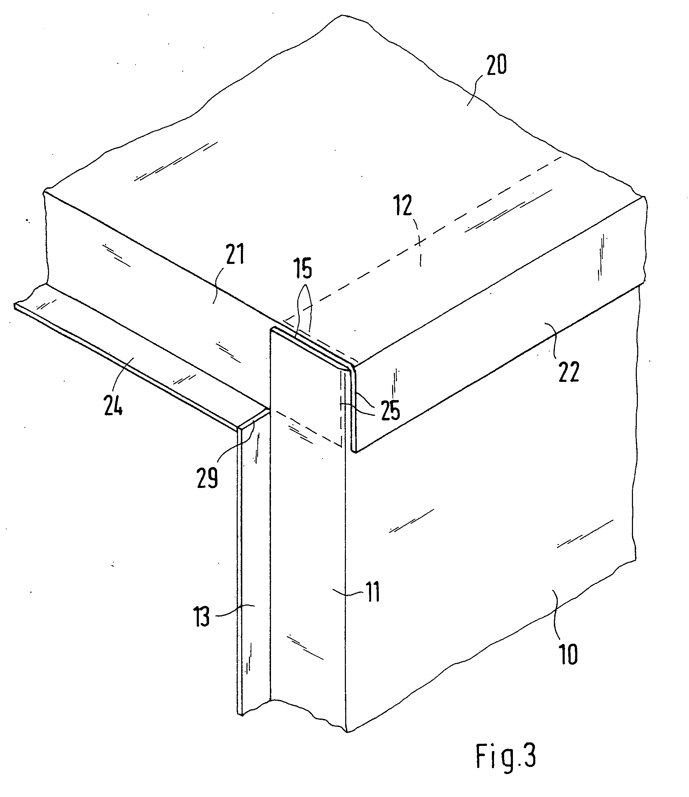

Wie die Teilperspektive nach Fig. 3 zeigt, deckt der Rand 11 der Seitenwand 10 im Eckbereich einen Teil des Randes 21 des Deckteils 20 oder des Bodenteils 30 ab. Zumindest im Bereich der Steckaufnahmen 15 und des Einführungsschlitzes 25 werden die Seitenwände 10 mit dem Deckel 20 oder dem Bodenteil 30 fest verbunden, vorzugsweise miteinander verschweißt. Es sind auch andere Verbindungsarten für die in den Eckbereichen überlappenden Ränder 11 und 21 bzw. 12 und 22 möglich.

Aus den Fig. 1 und 2 ist zu entnehmen, dass im Bereich der Frontseite der Rahmenkörper einen umlaufenden Anlagesteg aufweist, der durch abgekantete Anlagestege 13 und 24 an den Rändern 11 und 21 gebildet wird. Diese Anlagestege 13 und 24 stehen senkrecht zu den Rändern 11 und 24 der Seitenwände 10 und der Deck- und Bodenteile 20 und 30. Wie die Fig. 1 bis 3 zeigen, haben alle Ränder 11, 12, 21 und 22 gleiche Breite. Damit die Anlagestege 13 und 24 die Steckverbindungen in den Eckbereichen nicht beeinträchtigen, sind die Anlagestege 13 und 24 zu den Eckkanten hin mit Aussparungen 14 bzw. 23 versehen, die eine Breite aufweisen, die der Breite der Ränder 11, 12, 21 und 22 entspricht. Bei hergestellter Steckverbindung stoßen die Anlagestege 13 auf die Anlagestege 24 und bilden eine Stoßstelle 29, wie aus Fig. 3 zu entnehmen ist. Diese Stoßstellen 29 können miteinander verbunden, vorzugsweise verschweißt werden.

Die der Rückseite des Rahmenkörpers zugekehrten Ränder 11 und 12 der Seitenwände 10 und Ränder 21 des Deckteils 20 und Bodenteils 30 laufen in Endabschnitte 26 aus, die um die Dicke der Rückwand 40 zum Innenraum des Schaltschrankes hin abgesetzt sind. Die Rückwand 40 kann dann mit den Außenseiten der Ränder 11 und 21 der Seitenwände 10, des Deckteils 20 und des Bodenteils 30 bündig am Rahmenkörper angebracht werden.

Der an der Frontseite umlaufende Anlagesteg kann zur Anbringung der Scharnierelemente und Schließelemente für die Schranktüre und zu dessen Abdichtung verwendet werden, wenn die Innenseite ein Dichtungselement trägt.

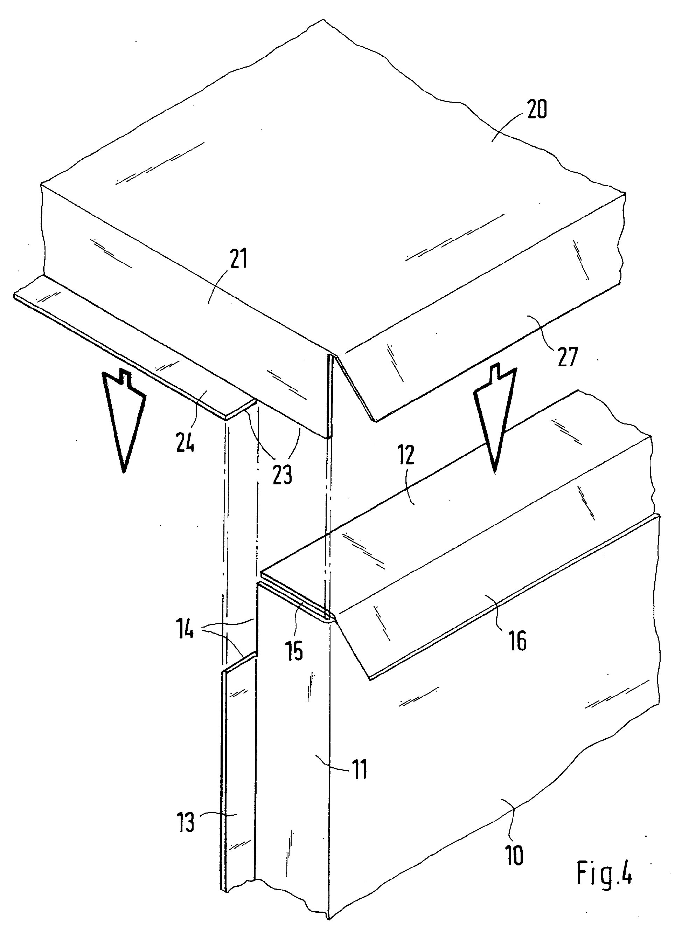

Bei der in Fig. 4 gezeigten Variante sind die den Seitenwänden 10 zugekehrten Ränder 12 doppellagig ausgebildet und laufen in Regenablaufabschnitte 16 aus, die an der Außenseite der Seitenwand 10 vorstehen und zu dieser einen spitzen Winkel einnehmen. Auch der zugekehrte Rand 27 des Deckteils 20 ist an diesen Winkel angepasst, so dass er nach Herstellung der Steckverbindung auf der Oberseite des Regenablaufabschnittes 16 aufliegt und mit diesem verbunden, insbesondere verschweißt werden kann. Ansonsten bleibt die Steckverbindung in den oberen Eckbereichen des Rahmenkörpers gleich. Bei den Steckverbindungen der Seitenwände 10 mit dem Bodenteil 30 ändert sich jedoch nichts, diese bleiben in der in den Fig. 1 bis 3 gezeigten Art beibehalten.

## Patentansprüche

1. Schrankkorpus für einen Schaltschrank aus zwei vertikalen Seitenwänden, die über ein Bodenteil und ein Deckteil miteinander verbunden sind und ein auf der Frontseite und der Rückseite offenen Rahmenkörper bilden, wobei die Rückseite mit einer Rückwand und die Frontseite mit an den beiden vertikalen Seitenwänden angelenkten Schranktüre verschlossen oder verschließbar sind,
**dadurch gekennzeichnet,**
**dass** die vertikalen Seitenwände (10) an den vertikalen Seiten und den horizontalen Seiten rechtwinklig abgewinkelte Ränder (11, 12) aufweisen, die in den Eckbereichen auf Abstand zueinander stehen und Steckaufnahmen (15) freilassen,
**dass** das Deck- und Bodenteil (20, 30) an den der Front- und Rückseite zugekehrten Seiten mit den den vertikalen Seitenwänden (10) zugekehrten Seiten mit rechtwinklig abgekanteten Rändern (21 und 22) versehen sind, die in den Eckbereichen auf Abstand zueinander stehen und einen Einführschlitz (25) freilassen,
**dass** die der Front- und Rückseite zugekehrten Ränder (21) von Deck-und Bodenteil (20, 30) in die Steckaufnahmen (15) der vertikalen Seitenwände (10) eingesteckt sind, wobei die den vertikalen Seitenwände (10) zugekehrten Ränder (22) von Deck- und Bodenteil (20, 30) die Außenseiten der vertikalen Seitenwände (10) hintergreifen und
**dass** zumindest im Bereich der Steckaufnahmen (15) und der Einführschlitze (25) die Seitenwände (10) und das Deck- und Bodenteil (20, 30) fest miteinander verbunden, vorzugsweise miteinander verschweißt sind.

2. Schrankkorpus nach Anspruch 1,
**dadurch gekennzeichnet,**
**dass** die Ränder (11, 21, 22) der Seitenwände (10), des Bodenteils (30) und des Deckteils (20) gleiche Breite aufweisen.

3. Schrankkorpus nach Anspruch 1 oder 2,
**dadurch gekennzeichnet,**
**dass** die der Frontseite zugekehrten Ränder (11, 21) der Seitenwände (10) und von Deck- und Bodenteil (20, 30) in Anlagestege (13, 24) übergehen, die senkrecht an diesen Rändern (11, 21) abstehen,
**dass** diese Anlagestege (13, 24) in den aufeinander stoßenden Eckbereichen mit Aussparungen (14, 23) versehen sind, die eine Breite aufweisen, die der Breite dieser Ränder (11, 21) entspricht und
**dass** die aufeinander stoßenden Enden der Ränder (11, 21) fest miteinander verbunden, vorzugsweise miteinander verschweißt sind.

4. Schrankkorpus nach einem der Ansprüche 1 bis 3,
**dadurch gekennzeichnet,**
**dass** die der Rückseite zugekehrten Ränder (11, 21) der Seitenwände (10) und des Deck- und Bodenteils (20, 30) in Endabschnitte (26) auslaufen, die um die Dicke der Rückwand (40) zur Rückseite hin abgesetzt sind, und
**dass** die Rückwand (40) mit diesen Endabschnitten (26) verbunden ist und bündig mit den Rändern (11, 21) der Seitenwände (10) und von Deck- und Bodenteil (20, 30) abschließt.

5. Schrankkorpus nach einem der Ansprüche 1 bis 4,
**dadurch gekennzeichnet,**
**dass** das Bodenteil (30) mit einem Durchbruch (28) zum Einbau von Kabeleinführungen versehen ist, die von einem abgekanteten Rand umgeben ist, der sich in den Innenraum des Rahmenkörpers erstreckt.

6. Schrankkorpus nach Anspruch 1,
**dadurch gekennzeichnet,**
**dass** die dem Deck- und Bodenteil (20, 30) zugekehrten Ränder (12) der Seitenwände (10) doppellagig ausgebildet sind und in Regenablaufabschnitte (16) übergehen, die im spitzen Winkel zu den Seitenwänden (10) abstehen, und
**dass** die den Seitenwänden (10) zugekehrten Ränder (27) im gleichen Winkel zu dem Deck- und Bodenteil (20, 30) stehen und auf den Regenablaufabschnitten (16) der Seitenwände (10) aufliegend mit diesen fest verbunden, vorzugsweise verschweißt sind.
